Europäisches Patentamt

European Patent Office

Office européen des brevets

(11) Publication number: **0 486 057 A2**

# EUROPEAN PATENT APPLICATION

(21) Application number: **91119548.5**

(22) Date of filing: **15.11.91**

(51) Int. Cl.5: **G01N  17/02**, G01N 17/04

(30) Priority: **16.11.90 IT 2208590**

(43) Date of publication of application:
**20.05.92 Bulletin  92/21**

(84) Designated Contracting States:
**AT BE CH DE DK ES FR GB GR IT LI LU NL SE**

(71) Applicant: **ORONZIO DE NORA S.A.**
**Via Motta 17**
**CH-6900 Lugano(CH)**

(72) Inventor: **Tettamanti, Michele**
**Via Varesina 126**
**I-22100 Como(IT)**

(74) Representative: **Kinzebach, Werner, Dr. et al**
**Patentanwälte Reitstötter, Kinzebach und**
**Partner Sternwartstrasse 4 Postfach 86 06 49**
**W-8000 München 86(DE)**

(54) **Permanent reference electrode for monitoring the electrochemical potential of metal structures in concrete and soil.**

(57)  The present invention relates to a permanent reference electrode for monitoring the electrochemical potential of metal structures in concrete, and soil, which electrode comprises a metal support, connected to a copper insulated wire, coated by a metal oxide or mixture of metal oxides and immersed in a cementitious solid electrolyte block exhibiting a high alkalinity, low permeability and high mechanical resistance. An external sheath made of a plastic insulating material is provided to protect the assembly.

The reference electrode exhibits a potential which is constant with time thus avoiding any need for regular control, maintenance or substitution.

EP 0 486 057 A2

EP 0 486 057 A2

Cathodic protection is a well-known technique to prevent corrosion of metal structures (pipelines, platforms, piers and so on) in natural or sea water, or structures buried in the soil and it is gaining an ever increasing attention for inhibiting corrosion also of steel rebars in concrete structures undergoing contamination by chloride ions. This electrochemical technique may represent in fact an economically and technically reliable alternative to conventional repairing procedures, especially when severe deterioration occurs requiring extensive repair work.

In new structures, where impressed current cathodic protection systems already installed during the construction stage are energized after a certain number of years when corrosion of the rebars begins, the breakout of corrosion has to be monitored by continuous and reliable measuring of the electrochemical potential of the steel rebars.

Once energized, cathodic protection of metal structures in soil and in concrete requires continuous, long-term and reliable measuring of the polarization potential of the structure.

The electrochemical potentials either as natural or as polarization value are collected on data loggers and sent through modem to remote control stations.

It has been demonstrated that the most efficient control of steel potential is obtained by positioning the reference electrode, the potential of which is known and remains stable with time, as close as possible to the metal structure or to the rebars in order to minimize the errors due to ohmic drops; it is consequently most advantageous to embed the permanent reference electrodes in a definitive way in the concrete or soil in which the steel structure is immersed.

In the cathodic protection of metal structures in soil, the most commonly used reference electrode is the copper/copper sulphate type consisting of a copper rod, immersed in a saturated solution of copper sulphate and contained in a suitable vessel together with copper sulphate crystals. Such vessel is provided at the bottom with a porous plug which acts as a salt bridge between the copper/copper sulphate saturated solution and the surrounding soil. In order to reduce the total electrical resistance the porous plug has to have a large cross area and a minimum thickness; on the other hand, these two features tend to reduce the reference electrode life as they favour the percolation of saturated copper solution, through the porous plug into the outside soil. As a consequence, the copper rod loses with time the contact with the saturated copper sulphate solution and the potential becomes erratic. Other disadvantages of such reference electrode are:

- flushing effect of the rain and surface waters which progressively brings to the dissolution of the $CuSO_4$ crystals of the saturated solution which is in contact with the copper rod;
- drying of the porous plug with consequent increase in the total electrical resistance;
- precipitation of copper/copper sulphate crystals within the pores of the porous plug, again with increased electrical resistance;
- diffusion by capillarity of the copper sulphate solution within the cables connecting the electrode to the voltmeter, with consequent corrosion problems.

Another commonly used permanent reference electrode in soil is the zinc/zinc sulphate type, consisting of a rod of pure zinc immersed in a backfill of a mixture of bentonite, gypsum and sodium sulphate. Despite the advantage of their low cost, these electrodes have experienced a number of drawbacks including:

- increased electrical resistance during the dry season when the backfill dries out;
- flushing effect of rain and surface waters on the backfill with the consequent change in the backfill composition and finally in the potential values of the reference electrode.

The aforementioned drawbacks cause a reduction of the expected life of the above mentioned electrodes, usually in the range of 4 to 5 years.

As regards the concrete applications, in the last years several types of permanent electrodes have been tested, such as lead, zinc as such or immersed in a zinc sulphate backfill, Mo/MoO3, graphite and Ag/AgCl in a backfill having a high chloride concentration (3% by weight).

Lead and zinc electrodes have an electrode potential which is defined by the corrosion reactions producing oxides, hydroxides and carbonates Said potential is therefore dependent on the type of electrochemical reaction taking place at the metal/concrete interface and on the environmental conditions. In the case of zinc further problems arise from durability of the backfill based on zinc sulphate. The behaviour of molybdenum electrodes varies from type to type depending on the characteristics of the commercial metal and the value of the potential may be affected by the presence of ferrous, ferric, or copper ions.

At present the most common electrodes are made of graphite and silver/silver chloride, immersed in a backfill containing a determined quantity of chloride ions.

2

As regards graphite, the remarkable advantage of a low cost is counterbalanced by various drawbacks, as its potential depends on a number of parameters (purity of the material, graphitization degree, presence or absence of residual groups onto the surface of the electrode) and on the quantity of oxygen coming to the surface.

The most commonly used type of silver/silver chloride electrode (described in GB 2 169 410 A application) comprises a silver wire coated by silver chloride and immersed in a solid electrolyte containing 3% by weight of chloride ions, positioned in a suitable container made of insulating material, closed at the bottom by a porous separator, or otherwise contained in a gas and liquid permeable cellulose membrane.

However, the above illustrated electrodes of the prior art are negatively affected by the following short-comings:

- risk of diffusion of chlorides from the solid backfill into the concrete with the consequent modification of the reference potential and poisoning of the surrounding concrete by chlorides and possible aggressive attack of the steel rebars
- drying out of the porous connection with the consequent interruption of the electric continuity between the concrete and the electrode

It is therefore evident that prior art electrodes for soil and concrete applications involve control, maintenance or substitution operations.

The problem becomes even more severe as substitution in turn involves removal of the electrodes from the soil or concrete and this is expensive and extremely difficult in particular when the electrode position is not readily accessible.

The present invention overcomes the drawbacks of prior art by providing for a reference electrode exhibiting a long life, having a low internal electrical resistance, involving no need for a backfill or porous connectors and being suitable for permanent immersion in soil or concrete.

DESCRIPTION OF THE INVENTION

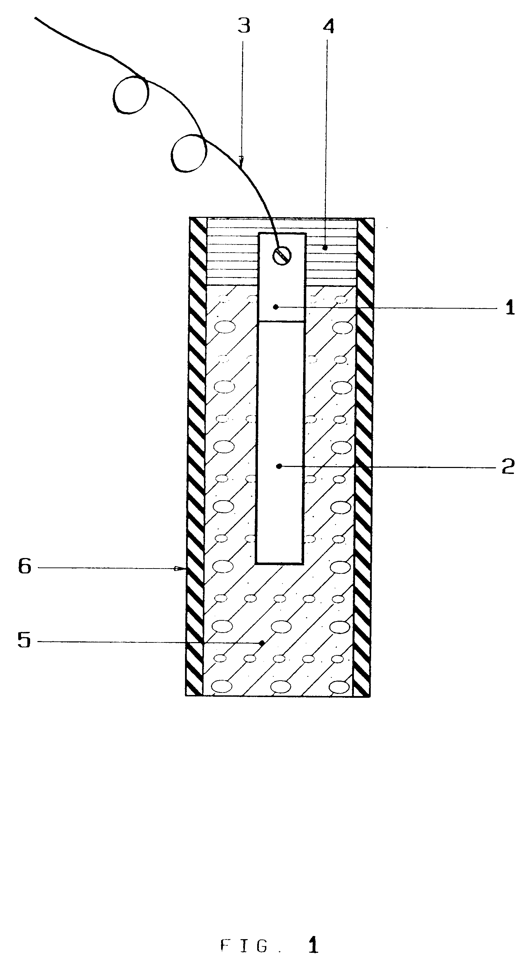

Fig. 1 shows a preferred embodiment of the present invention wherein an electrode made of a thin metal sheet, wire or mesh (1) having a metal oxide or a mixture of metal oxides coating (2), is connected to a shielded copper strand (3) by means of a connection suitably insulated by epoxy resin (4) and immersed in solid electrolyte made of cementitious mortar (5) having a high alkaline content, a water to cement low ratio and a high resistance to mechanical shocks. The electrode is protected by an insulating sheath (6), preferably having a cylindrical form, suitable for providing both higher mechanical resistance and effective shielding from electrical interferences.

As an example of coating, the type based on various cobalt spinels applied on conductive metal substrates will be considered. This type of coating has been suggested for use as anode for chlor-alkali electrolysis (described for example in U.S. patents nos. 3,977,958; 4,061,549; 4,142,005; 4,369,105; 4,368,110) or as anode used for the cathodic protection of steel rebars in concrete by the impressed current method. Polymetallic oxides with a spinel structure have a general formula: $M_xZ_yCo_3-(x+y)O_4$ where $0 < x <1$; $0 < y <1$; $0< (x + y) \leqq 1$ and where M is a metal of groups IB, IIA e IIIB and Z a metal of group IA of the Periodic Table. These spinels may also contain a modifying metal oxide in order to increase their mechanical resistance. The modifying oxide may belong to groups IIIB, IVB, VB, VIB and VIIB, IIA, IVA o VA of the Periodic Table. Generally, spinel-based coatings may be applied to conductive metal substrates such as titanium, tantalum, niobium, zirconium, molybdenum, tungsten, hafnium, vanadium or alloys thereof, by applying a liquid mixture (preferably a solution) of precursors, either of spinels and of modifying oxides, and heating the mixture or solution to a temperature and for a time sufficient to produce a spinel structure in the form of a layer onto the metal substrate, the surface of which is suitably prepared by degreasing, acid pickling in HCl or in HF/HNO3 mixtures. The temperature may be comprised between 275 and 500°C (preferably between 250 and 400°C) while the heating time is comprised between 1 and 10 minutes. Any decomposable and oxidable cobalt compound may be used as a precursor to produce an oxide such as cobalt nitrate, hydroxide or carbonate, cobalt nitrate being preferred.

The precursors of the modifying oxides are decomposed and oxidized under heating to form oxides which are incorporated into the spinel structure of the cobalt oxide. The modifying oxide is selected from the group comprising cerium, bismuth, lead, vanadium, zirconium, tantalum, molybdenum, chromium, zinc, aluminum, antimony, titanium, tungsten, zirconium being the preferred one. The content of the modifying oxide is generally comprised between 0 and 50%, preferably 5 - 20% on a molar basis.

The cobalt spinels offer a high stability in a large range of pH values, comprised between 4 and 14 and in particular between 9 and 14.

A further example of metal oxide coating is represented by a coating of oxides of the platinum group metal. A detailed description of this type of coating is given, for example, in EP 0 046 447 B.

The electrode potential of most metal oxides is a linear function of the pH in a rather wide pH range, that is, any particular value of the pH corresponds to a well definite and stable electrode potential as shown in the following equation:

$$E = E° - k\, pH$$

where $E°$ is a constant known as the standard potential. The device of the present invention comprises an electrode based on a metal oxide or a mixture of metal oxides coating embedded in a cementitious mortar brick having a high alkaline content, a water-to-cement low ratio and containing additives to reduce its permeability to extremely low values as to minimize carbonatation phenomena and diffusion of ions from the surrounding soil or concrete which could affect the potential of the reference electrode. The concrete is made in such a way so as to have, after setting, particular characteristics of mechanical resistance to avoid cracking during installation.

The cementitious materials field offers a large choice of chemical agents capable of modifying the physico-chemical properties of the same as such: superfluidizers, aerating or expanding agents, hydrosoluble polymers, resins, silica and the like. A suitable choice of such additives allows one to obtain a mortar having the necessary characteristics. Suitable formulations comprise a Portland cement having high resistance, in a ratio of 10 to 90%, superfluidizers based on beta-naftalensulphonic acid from 0.05% to 10%, expansion agents based on cement clinker with a high content of CaO from 0.03 to 3%, retarding agents based on ligninsulphonate from 0.01 to 8% of the total weight of the concrete; sand, having various grain sizes, from 30 to 90% of the total weight. The water to cement ratio is kept between 0.27 and 0.40, and preferably between 0.30 and 0.35.

The cementitious mortar according to the present invention, once set, has a mechanical resistance between 20 and 100 Megapascal and a permeability (expressed as Darcy coefficient) between 10exp-8 and 10exp-20.

The oxide-coated electrode may be in the form of a plate, wire or mesh, preferably a mesh as penetration of the mortar inbetween the strands of the mesh allows for a better electrical contact between the metal and the surrounding cementitious mortar. Preferably the mesh is made of expanded titanium sheet, having a mesh size of 2-6 mm in the long side dimension and 1-5 mm in the short side dimension, but also different geometries may be taken into consideration.

As regards the geometrical form of the device described in fig. 1, various modifications may be applied. Preferably it is in the form of cylinder having a diameter comprised between 10 and 50 mm and a length from 5 to 15 cm.

The present invention offers several advantages, such as:

- The oxide-coated electrode is stable and its potential is a linear function of the pH, in particular in the alkaline range.
- The cementitious mortar surrounding the electrode has a constant alkalinity and is perfectly compatible with soil and any kind of concrete; in addition it minimizes the total electrical resistance. Said cementitious mortar has a very low permeability to reduce the risk of carbonatation and diffusion of undesired ions towards the surface of the electrode; besides its high mechanical resistance makes the installation easier.
- Absence of a backfill, containing ions necessary to stabilize the electrode potential but potentially aggressive towards the metal structure to be monitored.
- Minimization of the flushing effects due to rain and surface waters as well as of the drying effects which may alter the electrode potential or increase the electrical resistance.
- No need of porous plugs which are subject to interruption of the electrical continuity, due to drying out or salt precipitation.

EXAMPLE I

Two ribbons of titanium, ASTM grade I, 20 cm long, 0.9 mm thick and 12.7 mm wide, were degreased in 1,1,1 trichloroethane, dried in air, immersed in a HF/HNO3 acid pickling solution for 30 seconds, washed in distilled water and dried in air. One of the samples thus prepared was immersed in an aqueous solution containing Co(NO3)2.6H2O, Zn(NO3)2.6H2O and ZrO (NO3)2 in a molar ratio of Co:Zn:Zr = 10 : 5 : 1.

Subsequently the ribbon was baked in oven at 390°C for 10 minutes. The immersion in the precursors solution was repeated for 12 times, followed by a final baking in an oven at 390°C for one hour.

4

The second sample was immersed in a solution comprising 6 ml of n-propanol, 0.4 ml concentrated hydrochloric acid and 0.1 g of iridium chloride. The sample was then dried and heated in air to 500°C for 10 minutes. The procedure was repeated for two additional times and the sample was finally heated in air at 500°C for 30 minutes.

The ribbons were cut out in samples 5 cm long, each sample being then welded to an insulated wire having 1 mm2 cross-section.

Different cementitious mortars, having the following compositions :

| - Portland cement : | 30 - 60 by weight |
| - superfluidizing agent : (based on betanaphthalenesulphonic acid) | 0.05 - 2% by weight |
| - expansion agent : (such as Dilacon (R), Stabilmac O, Denka CS) | 0.03 - 3% by weight |
| - retarding agent : (e.g. Predax) | 0.01 - 3% by weight of cement |
| - water to cement ratio : | 0.27 - 0.4 |

were poured in preformed plastic molds inserting there the samples, the portion comprising the connection with the cable being left out and insulated with epoxy resin.

After setting, some samples were inserted in a concrete block exposed to atmosphere while other samples were buried in soil. The potentials were measured for three years, the reference being calomel electrodes installed nearby. The potentials of the above described electrodes show an optimum stability with time. The standard deviation from the - 1.8 mV average value has been 25 mV only, independent from the external environment conditions.

**Claims**

1. A reference electrode for use in cathodic protection of metal structures in concrete and soil characterized in that it comprises a conductive metal substrate coated by a metal oxide or a mixture of metal oxides coating; said substrate being contained in a cementitious mortar block with high alkalinity and low permeability characteristics.

2. The reference electrode of claim 1, characterized in that the conductive metal support is made of titanium, tantalum, niobium, molybdenum, tungsten, hafnium, vanadium or alloys thereof, in the form of ribbon, mesh or rod.

3. The reference electrode of claims 1 or 2, characterized in that the mixture of metal oxides comprises a cobalt spinel having a general formula $M_xZ_yCo_{3-(x+y)}O_4$ where M represents a metal of groups IB, IIA, IIB, Z represents a metal of group IA of the Periodic Table of the elements, and where x is comprised between 0 and 1, y between 0 and 1 and x, y and (x+y) are comprised between 0 and 1 and M, Z and Co are sufficient to fill the valences of oxygen in the spinel structure.

4. The reference electrode of claims 1 or 2 characterized in that the metal oxide or mixture of metal oxides coating comprises a platinum group metal oxide.

5. The reference elctrode of any one of claims 1 to 4 characterized in that the cementitious mortar has a water to cement ratio comprised between 0.27 and 0.5.

6. The reference electrode according to any one of the preceding claims characterized in that the cementitious mortar has a mechanical resistance, after a 28-day setting, comprised between 10 and 20 Megapascal.

7. The reference electrode according to any one of the preceding claims characterized in that the cementitious mortar has a permeability expressed as Darcy coefficient ranging from 10exp-8 to 10-exp-20.

8.  The reference electrode according to any one of the preceding claims characterized in that the cementitious mortar has a resistance to shrinking and expansion comprised between 10 microns/milliliter and 1000 microns/milliliter.

9.  The reference electrode according to any one of the preceding claims characterized in that the cementitious mortar is inserted in an external sheath made of plastic material.

10. The reference electrode of claim 9 characterized in that the external sheath is made of PVC, polypropylene or polyethylene.

11. The reference electrode of claim 9 characterized in that the external sheath is made of a thermosetting material.

F I G . 1